Europäisches Patentamt

**European Patent Office**

**Office européen des brevets**

(11) Numéro de publication: **0 055 698**
**B1**

(12) # FASCICULE DE BREVET EUROPÉEN

(45) Date de publication du fascicule du brevet:
13.08.86

(51) Int. Cl.⁴: **C 08 L 27/06**, C 08 F 259/04

(21) Numéro de dépôt: **81870048.6**

(22) Date de dépôt: **08.12.81**

(54) Adjuvant pour améliorer la résistance à la fracture du polychlorure de vinyle, procédé de fabrication de cet adjuvant et utilisation.

(30) Priorité: **10.12.80 BE 203105**

(43) Date de publication de la demande:
**07.07.82 Bulletin 82/27**

(45) Mention de la délivrance du brevet:
**13.08.86 Bulletin 86/33**

(84) Etats contractants désignés:
**AT BE CH DE FR GB IT LI LU NL SE**

(56) Documents cité:
**FR-A-1 306 160**
**FR-A-1 358 641**
**FR-E-83 435**

(73) Titulaire: **Liegeois, Jean-Marie, 176, Moulin de Wadeleux, B-4654 Charneux-Herve (BE)**

(72) Inventeur: **Liegeois, Jean-Marie, 176, Moulin de Wadeleux, B-4654 Charneux-Herve (BE)**

(74) Mandataire: **van Malderen, Michel, p.a. FREYLINGER & ASSOCIES 85/042 Boulevard de la Sauvenière, B-4000 Liège (BE)**

EP 0 055 698 B1

## Description

La présente invention concerne un adjuvant pour améliorer la résistance à la fracture du polychlorure de vinyle, le procédé de fabrication de cet adjuvant et l'utilisation de celui-ci.

Le polychlorure de vinyle est un polymère fort apprécié pour la fabrication de matériaux divers intervenant dans de nombreuses applications et principalement dans le bâtiment. Les qualités reconnues du polychlorure de vinyle par rapport aux principales autres matières plastiques rigides sont sa bonne stabilité aux agents atmosphériques, sa relative facilité de mise en oeuvre adaptée aux procédés continus et son prix de revient pas trop élévé eu égard aux grandes quantités mises en oeuvre.

Toutefois, le polychlorure de vinyle (PVC) présente plusieurs défauts. Certains de ces défauts, comme sa sensibilité à la température, peuvent être corrigés par l'emploi judicieux d'adjuvants bien adaptés, tels quel les stabilisants thermiques. Il existe d'autres défauts qui n'ont pas encore pu être corrigés de mainière satisfaisante à ce jour, si ce n'est au détriment d'autres propriétés très importantes. Le principal de ces défauts est essentiellement la fragilité du PVC, c'est-à-dire sa résistance mécanique faible tant sous les sollicitations de chocs, c'est-à-dire à grande vitesse, que sous des sollicitations répétées, c'est-à-dire en fatigue. Sous ces modes d'action, mais aussi sous l'action de forces statiques dépassant une certaine limite, le PVC se présente comme un matériau peu résistant.

Certaines techniques éprouvées pour le renforcement d'autres matières plastiques sont actuellement appliquées avec un certain succès dans le cas du PVC pour améliorer sa résistance à la fracture. Ces techniques consistent à incorporer un polymère de nature caoutchoutique au PVC. Elles ont été appliquées avec succès dans le cas des polymères styréniques par exemple et ont conduit aux matériaux bien connus comme l'ABS (terpolymère acrylonotrile - butadiène - sytrène) et les HIPS (High Impact Polystyrenes). D'autres matériaux polymériques, tels que les résines époxydes, sont aussi avantageusement améliorés par l'incorporation de phases élastomériques comme les caoutchoucs butadiène-acrylonitrile comprenant des groupes carboxyliques. Dans le cas du PVC, les polymères caoutchoutiques utilisés comme additifs sont couramment le MBS (méthylméthacrylate - butadiène - styrène), les copolymères EVA (éthylène-acétate de vinyle), ainsi que les copolymères ou homopolymères acryliques. Dans certains cas, l'ABS est également utilisé. Le mode d'incorporation de cette phase caoutchoutique dans le PVC peut varier, depuis un simple mélange physique réalisé à l'intervention d'un malaxage continu ou discontinu, jusqu'à une incorporation par greffage chimique au stade de la polymérisation du chlorure de vinyle. Le résultat, dans tous les cas, est l'obtention d'un matériau à structure plus ou moins discrète, faite d'une phase caoutchoutique dispersée au sein d'une matrice by PVC.

La technique qui vient d'être décrite, à savoir l'incorporation d'un polymère caoutchoutique dans une matrice de PVC, améliore certes la résistance à la fracture du polymère. Malheureusement, cette technique détériore plusieurs autres propriétés: elle abaisse la température de ramollissement du matériau ainsi obtenu et limite le domaine de son emploi; elle diminue la résistance aux produits chimiques et en particulier aux solvants, résistance que le PVC pur a naturellement; elle hypothèque sérieusement l'aptitude du PVC pur à résister valablement à la combustion; elle supprime dans de nombreux cas la transparence et la clarté du PVC homopolymère; enfin, elle abaisse la rigidité du PVC et la viscosité à l'état fondu est parfois plus élevée que celle du PVC pur.

Pour préciser le mode de détérioration de ces différentes propriétés, on peut analyser ce qui suit.

En ce qui concerne l'abaissement du point de ramollissement, on peut dire que celui-ci est influencé par la partie de la phase caoutchoutique incorporée au PVC qui peut entrer en interaction moléculaire avec ce dernier. L'effet résultant est un abaissement relatif de la température de transition vitreuse de ce mélange de polymères.

En ce qui concerne la diminution de rigidité du matériau, elle se fait généralement tant par l'effet plastifiant de l'additif que par un effet de volume dû à une inclusion de matière dont les caractéristiques mécaniques sont de plusieurs ordres de grandeur inférieures à celles du PVC lui-même.

Pour ce qui est du comportement au feu, ou peut rappeler que le PVC, par sa nature et par sa teneur en chlore avoisinant les 57% en poids, est d'emblée un matériau ayant un faible pouvoir combustible. Il suffit de peu d'additifs, en effet, pour ranger ce matériau dans les classes les meilleures quant à la résistance au feu. L'addition d'un polymère caoutchoutique, qui généralement est un hydrocarbure dont la structure chimique contient en outre un peu d'oxygène ou éventuellement d'azote, abaisse fortement les caractéristiques de comportement au feu telles que définies par l'indice d'oxygène par exemple, même pour des faibles teneurs en additifs caoutchoutiques. Il est dans ces conditions très difficile de ramener le matériau final dans la meilleure classe en ce qui concerne le comportement au feu, même en utilisant de fortes doses d'agent ignifugant.

L'un des objectifs visés par la présente invenion consiste à procurer un matériau à base de PVC dont la résistance à la fracture est sensiblement améliorée, mais dont les autres propriétés énumérées ci-avant ne sont pas détériorées.

Un autre objectif visé par l'invention consiste à décrire un nouvel additif permettant d'améliorer la résistance à la fracture du PVC, ainsi que la procédé permettant de fabriquer cet additif.

Les objectifs poursuivis peuvent être atteints en incorporant à du PVC préparé de mainière classique par les procédés industriels de polymérisation en masse, en suspension ou en émulsion un additif qui, chimiquement, est également fait de PVC mais dont la structure, le poids moléculaire et la cristallinité sont différents.

Certaines techniques ont déjà été décrites où l'on mélange entre eux des PVC obtenus par des procédés classiques de polymérisation différents. C'est ainsi que FR—A—1.306.160 décrit des mélanges faits d'une part, de produits de polymérisation du chlorure de vinyle qui sont obtenus par polymérisation en dispersion aqueuse en présence d'émulsionnants ionogènes mais cependant en l'absence de colloïdes protecteurs, procédé dit en émulsion, et d'autre part de produits de polymérisation du chlorure de vinyle qui sont obtenus par polymérisation d'une dispersion aqueuse stable du monomère préparé en présence de colloïdes protecteurs, procédé dit en suspension. Les avantages procurés par de tels mélanges concernent l'abaissement de la viscosité de plastisols ou organosols qui résultent de l'incorporation à ces mélanges des plastifiants usuels à des concentrations ne dépassant pas 20%. Pour obtenir le constituant de ce mélange préparé en émulsion, on a suggéré de polymériser le chlorure de vinyle au départ d'un germe de latex, c'est-à-dire au départ d'une partie aliquote d'un latex préparé indépendamment. Au cours de la polymérisation, des particules de germes de latex peuvent ainsi grossir jusqu'à des diamètres de 0,4 micromètre qu'il serait très difficile d'atteindre en polymérisant directement sans utiliser le germe de latex. Cette dimension particulière des particules est la seule caractéristique signalée de ce constituant qui par ailleurs, a été polymérisé dans son stade final, à une température inférieure à celle de préparation du germe. Au contraire de ce qui concerne la dimension finale des particules, on n'explique pas si cette différence de température influence les propriétés des dispersions des mélanges résultants dans les plastifiants.

D'autres produits ont été décrits dans FR—A—1.358.461, qui sont des mélanges réalisés après la polymérisation, d'un polymère de chlorure de vinyle préparé en suspension aqueuse à une température supérieure à 40°C et d'un polymère de chlorure de de vinyle préparé en suspension aqueuse également, mais à une température inférieure à 0°C. Dans une addition à ce brevet (FR—A—83.435), on remplace l'un de ces polymères du mélange par un polymère de chlorure de vinyle préparé en suspension aqueuse à une température comprise entre 0° et 40°C. Les avantages procurés par ces mélanges concernent essentiellement le comportement vis à vis de la chaleur et en particulier, la stabilité dimensionnelle dans l'eau bouillante de fibres obtenues par un filage sec ou humide de ces mélanges.

Conformément à l'invention, l'adjuvant pour améliorer la résistance à la fracture du polychlorure de vinyle consiste en des particules dans lesquelles il existe un gradient de poids moléculaire croissant de 40 00 à 80 000 à la surface, à 60 000 à 300 000 à l'intérieur de la particule et un gradient de taux de cristallinité croissant de 5 à 10% à la surface à 10 à 35% à l'intérieur de la particule, lesdites particules étant obtenues par polymérisation de chlorure de vinyle en émulsion aqueuse en deux ou plusieurs étapes, l'une au moins de ces étapes étant effectuée entre 0 et 42°C, tandis que la dernière étape du procédé se déroule entre 46 et 60°C.

En opérant de cette manière, on forme des particules de latex qui ne sont pas homogènes du centre à la périphérie. En effet, lorsque la polymérisation à basse température est réalisée à la première étape, et que la polymérisation à température normale est réalisée à la dernière étape, il existe dans ces particules de latex un gradient de poids moléculaire qui va en augmentant de la surface vers le centre de la particule, c'est-à-dire qui va de 40 000 à 80 000 à la surface (exprimé en terme de poids moléculaire en poids) jusqu'à 60 000 à 300 000 au centre de la particule, et un taux de cristallinité qui va également en croissant de la surface de la particule au centre de celle-ci, de 5 à 10% à la surface à 10 à 35% au centre de la particule.

Dans le cas où la polymérisation à basse température n'est pas effectuée à la première étape mais dans une quelconque étape suivante précédant la dernière étape, le poids moléculaire et la cristallinité passent par un maximum à une certaine distance du centre des particules pour décroître à la surface extérieure de celles-ci.

Une caractéristique de l'invention est d'avoir, en tout état de cause, une répartition de la composition de l'additif préparé en émulsion telle que les particules de latex qui constituent l'emulsion, contiennent en surface un polymère de mêmes caractéristiques que les polymère commerciaux auxquels l'additif sera mèlangé, ce qui est obtenu en realisant la dernière étape de la polymérisation entre 46°C et 60°C.

La première étape qui gouverne la formation du noyau des particules est une copolymérisation qui fait intervenir, en plus de chlorure de vinyle, autre monomère notamment un comonomère tel que l'acétate de vinyle, le styrène, le butadiène, un ester acrylique ou méthacrylique ou un mélange de ceux-ci entre eux ou avec un autre monomère, de manière à faciliter la bonne mise en oeuvre des préparations contenant l'additif.

Suivant une forme d'exécution de l'invention, on prépare l'additif en polymérisant d'abord du chlorure de vinyle par un procédé en émulsion à une température inférieure ou égale à 42°C. On utilise préférentiellement une quantité d'agent tension-actif telle que la tension superficielle du milieu en fin de cette étape de polymérisation soit supérieure à la tension superficielle qui serait observée pour le même tensio-actif dans l'eau pour au-delà de sa concentration micellaire critique. On peut par exemple utiliser un agent tensio-actif anionique à raison de $10^{-3}$ à $2.10^{-2}$ mole par litre. On travaille en présence d'un initiateur de polymérisation radicalaire, par exemple du persulafate de postassium, du persulfate d'ammonium ou du peroxyde d'hydrogène, employé à raison de $10^{-3}$ à $5.10^{-1}$ mole par litre par exemple. On peut encore éventuellement ajouter un tampon poúr fixer le pH entre 6 et 12 ainsi qu'un système rédox pour accélérer la décomposition de l'initiateur. La teneur en chlorure de vinyle est fixée à un niveau pouvant aller de 10% à 80% de la quantité nette d'eau mise én oeuvre. Pour la deuxième étape qu'on ait réalisé une polymérisation complète ou non du chlorure de vinyle présent, on peut ajouter du chlorure de vinyle (et éventuellement de l'eau) puis on élève la température à un niveau compris entre 46°C et 60°C, la quantité de chlorure de vinyle ajoutée étant comprise entre 10% et 80% en poids de la quantité nette d'eau mise en oeuvre.

Dans chaque étape, le chlorure de vinyle peut être alimenté dans le réacteur soit en une fois, soit en semi-continu.

Si c'est nécessaire, on peut procéder à une nouvelle addition d'agent tensio-actif au début de la deuxième étape mais de manière telle que la tension superficielle du milieu ne soit pas abaissée au niveau de la valeur qui est propre à l'agent tensio-actif dans l'eau pure à une concèntration supérieure à la concentration micellaire critique.

Comme on l'a vu précédemment, une autre forme d'exécution de l'invention consiste à effectuer la première étape de la polymérisation à une température comprise entre 46°C et 60°C et une deuxième étape à 42°C ou à une température inférieure à celle-ci. Dans ce cas, il faut prévoir une troisième étape avec éventuellement un ajout de chlorure de vinyle s'il a entièrement été consommé et éventuellement d'eau et des réactifs usuels de polymérisation, à une température comprise entre 46°C et 60°C.

Dans le procédé de fabrication de l'additif suivant l'invention, l'importance relative du chlorure de vinyle utilisé à la première étape et aux étapes suivantes n'est pas critique, mais il est avantageux que ce rapport soit proche de l'unité. Il n'est pas intéressant qu'il soit inférieur à 0,2 ni supérieur à 5. Cependant, on peut souhaiter préparer le matériau plastique final par cette synthèse sans devoir diluer l'additif dans un PVC conventionnel. Dans ce cas, ce rapport du monomère pourra aller de 2 à 10% de la fraction préparée à basse température pour 98 à 90% de la fraction aux autres températures. Ce rapport du monomère entre les différentes étapes de la polymérisation et le degré de dilution éventuelle sont choisis de manière telle que le matériau obtenu ultérieurement contienne de 2 à 10% de PVC polymérisé à une température inférieure à 42°C. La limite supérieure de 10% a pour but de ne pas altérer les propriétés rhéologiques du produit polymérique final par un excès de composant cristallin à poids moléculaire élevé.

Le polymère à gradient de composition obtenu par le procédé de l'invention peut être séparé de l'émulsion par les moyens classiques industriels, c'est-à-dire par séchage par atomisation ou par coagulation suivie d'un séchage dans un sécheur à lit fluidisé ou dans un sécheur à tambour tournant.

Ce polymère hétérogène sur le plan de la morphologie peut avantageusement être mélangé à du PVC classique tel qu'il est obtenu par les procédés industriels de polymérisation en masse, en suspension ou en émulsion. Comme on l'a vu, il peut également être utilisé tel quel à condition que la fraction de polymère synthétisé à une température inférieure ou égale à 42°C ne dépasse pas 10%.

Le mélange avec le PVC classique peut se faire aisément à l'aide des mélangeurs rapides de type PAPENMEYER® dans lesquels sont également introduits les additifs classiques tels que les stabilisants thermiques et les lubrifiants.

Le matériau finalement obtenu présente une résistance à la fracture fortement améliorée, tant aux chocs qu'à la fatigue. Le tableau suivant montre les résultats qui ont été obtenus pour des structures particulières du polymère utilisé comme additif et pour les teneurs particulières de ces additifs. Ces résultats sont comparés à ceux obtenus avec un additif commercial ayant un effet favorable reconnu sur la résistance à l'impact, à savoir "PARALOID KM-611"® de Rohm and Haas qui consiste en un polymère acrylique.

Les exemples de réalisation, donnés ci-après à titre illustratif mais non limitatif, permettent de mieux comprendre la portée de l'invention.

Ces exemples permettent de comparer les résistances à la fracture, au choc et en fatigue, manifestées par des matériaux préparés selon l'invention (exemples 1, 2, 3, 9) aux résistances manifestées par des produits préparés selon le savoir-faire antérieur, soit qu'il s'agisse d'un additif préparé par polymérisation en 2 étapes dont la dernière étape a été réalisée à une température inférieure à 42° (exemples 4 et 5) soit qu'il s'agisse d'un additif préparé à une seule température inférieure à 42° (exemple 8). D'autres exemples montrent les résistances mesurées dans les mêmes conditions pour le PVC commercial utilisé seul, sans additif, (exemple 7) et pour ce PVC renforcé d'un additif anti-choc commercial et reconnu comme valable (exemple 6).

Les valeurs rapportées pour la résistance au choc sont les vitesses critiques de dissipation d'énergie (Gc) mesurées selon le mode Charpy et calculées selon E. Plati et J. G. Williams, (Polymer Eng. & Sc. *15* (1975) 470. Les valeurs rapportées pour la résistance en fatigue sont d'une part les paramètres A et m de la loi de Paris traduisant la vitesse de propagation des fissures (da/dN) en fonction du paramétre $\Delta K$ définissant le domaine de variation du facteur d'intensité de tension (Fatigue of Engineering Plastics, HERTZBERG R. W. Manson J. A. Academic Press New York (1980), 81, et d'autre part la résistance en fatigue $K_c$ observée avant la rupture catastrophique des éprouvettes (Fatigue of Engineering Plastics, Hertzberg R. W. Manson J. A. Academic Press

New York (1980), 79. Cette résistance $K_c$ n'a été indiquée au tableau que dans le cas où elle a pu être déterminée de manière rigoureuse. Dans les autres cas, on a observé une résistance apparente trois à cinq fois plus élevée que pour la matériau de référence (exemple 7). Cette valeur élevée de $K_c$ apparent, observée en même temps qu'une diminution sensible des paramètres A et m, est associée à un mécanisme de rupture ductile qui témoigne de l'effet bénéfique de l'additif.

Les exemples ci-après indiquent les conditionss opératoires utilisées pour préparer les compositions reprises aux tableaux annexés.

Exemple 1

Dans un réacteur en acier inoxydable d'une capacité de 5,4 litres, équipé d'un agitateur à pales plates d'une largeur de 5 cm, on réalise une polymérisation en deux étapes. On introduit d'abord 3 litres d'eau désionisée et désaérée, on ajoute 18,75 g de laurylsulfate de sodium et 2,1 g de persulfate d'ammonium ainsi que 5,71 g de borax. On réalise le vide puis on introduit, après balayage à l'azote suivi d'un nouveau vide, 800 ml de chlorure de vinyle à 15°C. On enclenche l'agitation à une vitesse de 300 tours par minute et on porte la température du réacteur à 40°C à l'aide de circulation d'eau chaude dans la double enveloppe du réacteur. On polymérise pendant 6 heures 35 minutes jusqu'à ce que la pression atteigne une valeur de $10,20.10^4$Pa. On arrête l'agitation, on introduit 1200 ml de chlorure de vinyle, on enclenche de nouveau l'agitation à 200 tours et on porte la température du réacteur à 50°C. On polymérise pendant 3 heures 50 minutes jusqu'à ce que la pression soit tombée à $29,43.10^4$Pa, on refroidit le latex de polymère. Ce latex est coagulé, lavé et séché après filtration. Le polymère obtenu est alors ajouté à un PVC commercial SOLVIC® S264 GA pour obtenir des teneurs de 4,5%, 8% et 13.5% en poids de constituant préparé à 40°C.

A 100 parties du mèlange de résines ainsi obtenu, on ajoute les stabilisants et lubrifiants: 1,5 g de MARK WSX®, 0,26 ml de MARK C®, 2,5 g de DRAPEX® 6—8 et 0,2 g de stéarate de zinc. Le mélange et ses additifs est travaillé sur un malaxeur à cylindres à une température de 180°C. Le crêpe obtenu après gélification est découpé et utilisé pour la préparation de plaques par moulage à la presse à plateaux chauffants. De ces plaques, on découpe des éprouvettes destinéees aux mesures par essai-choc selon le mode CHARPY. Une autre partie des crêpes est utilisée pour des mesures théologiques dans un viscosimètre à capillaire à 180°C. On exploite selon la méthode exposée précédemment, la théorie de la mécanique de fracture pour exprimer les résultats de choc et on utilise une relation de type puissance pour analyser les résultats de viscosité. Les propriétés mesurées sont consignées aux tableaux ci-après.

Exemple 2

Cet exemple est identique à l'exemple 1 mais en polymérisant dans la première étatpe à une température de 36°C.

Exemple 3

Exemple identique à l'exemple 1 mais dans lequel la température de polymérisation à la première étape est de 32°C.

Exemple 4

Exemple identique à l'exemple 1, sauf qu'à la première étape de polymérisation on utilise 1200 ml de chlorure de vinyle et une température de 50°C. Les temps de polymérisation et les pressions finales sont consignées au tableau II. L'additif a également été testé à 2,3%.

Exemple 5

Exemple identique à l'exemple 1, mais dans lequel on utilise 1200 ml de chlorure de vinyle à la première étape ainsi qu'une température de 50°C, tandis que dans la deuxième étape on ajoute 800 ml de chlorure de vinyle et on polymérise à 32°C. Les temps de polymérisation et les pressions finales sont consignées au tableau ainsi que les propriétés. L'additif a été également testé à une concentration de 2,3%.

Exemple 6

On a réalisé d'autres expériences de référence en mélangeant 100 g de résine de base et 10 g de "PARALOID KM-611"® de ROHM and HAAS, ce produit étant un additif reconnu pour l'amélioration qu'il apporte à la résistance au choc du PVC. Les propriétés observées sont également consignées au tableau II.

Exemple 7

A titre de comparaison également, on a déterminé les caractéristiques d'un PVC conventionnel utilisé à l'état pur.

Exemple 8

Egalement à titre de comparaison, on a déterminé les caractéristiques d'un mélange où intervient un PVC de poids moléculaire plus élevé (chlorure de vinyle polymérisé à 36°C), mais n'ayant pas subi la deuxième étape de polymérisation. Cet additif a été utilisé à raison de 2% à 5%.

Exemple 9

On a effectué une polymérisation en trois stades utilisant les mêmes réactifs que dans l'exemple 1 mais en polymérisant 1200 ml de chlorure de vinyle à 52°C dans le premier stade, 400 ml à 24°C dans le second stade et 400 ml à 50°C dans le troisième et dernier stade.

Les résultats obtenus sont repris aux tableaux I et II annexés qui représentent pour le tableau I les propriétés des adjuvants selon l'invention et pour le tableau II les propriétés des adjuvants selon létat de la technique.

Pour comprendre la portée de l'invention il faut noter les résultats obtenus pour la résistance au choc et en fatigue. Il faut en outre vérifier que la viscosité à l'état fondu (180°C) n'est pas modifiée de manière significative.

Au tableau II on dispose des résultats obtenus en opérant selon le savoir-faire antérieur, c'est-à-dire sans additif ou bien en réalisant des mélanges avec un adjuvant déjà décrit. On observe que le comportement en fatigue avec les adjuvants est comparable à ce qui est observé pour le PVC non modifié (exemple 7). La valeur du paramètre A n'est pas très différente et la résistance dynamique en fatique $K_c$ est sensiblement la même. Ce qui est surtout remarquable, c'est que tous ces échantillons préparés selon le savoir-faire ont en fatique une rupture fragile permettant de déterminer cette valeur $K_c$ en s'appuyant sur la théorie de la mécanique de la rupture. Par contre, pour les échantillons obtenus selon l'invention, on peut obtenir non seulement de bonnes propriétés au choc, mais surtout une résistance en fatigue nettement améliorée, ce qui est surprenant. On constate en effet que le logarithme du paramètre A dimuinue de 0,6 à 1 selon les cas, ce qui signifie que la vitesse de propagation des fissures est réduite de 4 à 10 fois pour une même intensité des tensions. Encore plus surprenant est le fait que sur 16 échantillons testés, 9 ont cédé à la fracture par mécanisme ductile ce qui est très important en pratique si l'on veut prévenir une rupture catastrophique. Dans les autres cas où la rupture fut fragile, on constate que la valeur de $K_c$ est sensiblement supérieure à ce qui était observé au tableau II pour le savoir-faire antérieur. La manière d'exploiter ces résultats pour prédire la durée de vie d'une pièce soumise à un effort cyclique est décrite dans Hertzberg R. W. et Manson J. A. (voir supra) à la formule: 3.22 à la page 138.

On y voit que plus les paramètres A et m sont petits, plus grand est le nombre de cycles N avant rupture.

TABLEAU I
Exemples selon l'invention

| Exemple No. | Conditions de synthese Monomère ml à 15°C / Température °C / Durée h:min / Pression finale KPa | | | % adjuvant basse température mélangé à PVC S264 GA SOLVIC® | Utilisation de adjuvant | | | | | |
|---|---|---|---|---|---|---|---|---|---|---|
| | | | | | Essais | Viscosité à | | Essais de fatigue | | |
| | 1° étape | 2° étape | 3° étape | | Choc Charpy $G_{ic}$ (kgcm/cm²) | 200 s⁻¹ K Pa.s | 400 s⁻¹ K Pa.s | $-\log(A)$ | m | $K_c$ MPa√m |
| 1 | 800 | 1200 | | 4.5 | 3.31 | 6.41 | 3.76 | 4.06 | 2.88 | ductile |
| | 40° | 50° | | | | | | 4.13 | 3.21 | 1.87 |
| | | | | | | | | 4.31 | 2.97 | ductile |
| | 6:35 | 3:50 | | 8.0 | 2.09 | 6.74 | 3.98 | 4.11 | 3.62 | 1.61 |
| | 102,0 | 294,3 | | | | | | 4.14 | 2.92 | ductile |
| | | | | | | | | 4.02 | 2.62 | 1.7 |
| | | | | 13.5 | 2.15 | 6.70 | 3.90 | — | — | — |
| 2 | 800 | 1200 | | 4.5 | — | 6.84 | 4.11 | 4.48 | 3.13 | ductile |
| | 36° | 50° | | | | | | 4.64 | 3.75 | ductile |
| | 18:30 | 3:02 | | 8.0 | 2.75 | 7.16 | 4.16 | 4.19 | 3.51 | 1.86 |
| | | | | | | | | 4.53 | 3.26 | ductile |
| | 39,2 | 245,2 | | | | | | 4.23 | 2.66 | ductile |
| | | | | 13.5 | 2.50 | 7.47 | 4.34 | — | — | — |
| 3 | 800 | 1200 | | 4.5 | 3.34 | 7.30 | 4.21 | 4.20 | 2.85 | ductile |
| | 32° | 50° | | | | | | 4.31 | 3.21 | — |
| | | | | | | | | 3.84 | 2.34 | 1.46 |
| | 22:25 | 3:28 | | | | | | 4.13 | 3.19 | ductile |
| | 102,0 | 215,8 | | 8.0 | 3.35 | 7.43 | 4.24 | — | — | — |
| | | | | 13.5 | 3.41 | 7.60 | 4.36 | — | — | — |
| 9 | 1200 | 400 | 400 | 7.0 | 3.44 | — | — | — | — | — |
| | 52° | 24° | 50° | | | | | | | |
| | 3:26 | 43:00 | 3:18 | | | | | | | |
| | 294,3 | 73,5 | 201,1 | | | | | | | |

## 0 055 698

TABLEAU II

Exemples selon le savoir-faire anterieur

| Exemple No. | Conditions de synthese — Monomère ml à 15°C / Température °C / Durée h:min / Pression final KPa — 1° étape | 2° étape | 3°étape | %adjuvant basse température mélangé à PVC S264 GA SOLVIC® | Essais Choc Charpy $G_{ic}$ (kgcm)cm² | Viscosité à 200 s⁻¹ K Pa.s | 400 s⁻¹ K Pa.s | Essais de fatigue $-log(A)$ | m | $K_c$ MPa√m |
|---|---|---|---|---|---|---|---|---|---|---|
| 4 | 1200 | 800 | | 2.3 | 3.84 | 7.53 | 4.49 | — | — | — |
| | 50° | 36° | | 4.5 | 3.84 | 7.48 | 4.65 | — | — | — |
| | 3:34 | 13:52 | | 8.0 | 3.25 | 7.08 | 4.00 | — | — | — |
| | 255,0 | 39,2 | | 13.5 | 3.58 | 7.53 | 4.27 | — | — | — |
| 5 | 1200 | 800 | | 2.3 | 3.62 | 6.26 | 3.91 | 3.6 | 3.5 | 1.36 |
| | 50° | 32° | | | | | | 3.61 | 3.0 | 1.28 |
| | | | | | | | | 3.6 | 2.66 | 1.04 |
| | 3:43 | 18:34 | | 4.5 | 3.35 | 7.33 | 4.05 | 3.69 | 3.34 | 1.08 |
| | | | | | | | | 3.58 | 3.36 | 1.12 |
| | | | | | | | | 3.73 | 2.72 | 1.24 |
| | | | | | | | | 3.71 | 2.16 | — |
| | | | | 8.0 | 3.82 | 7.03 | 4.26 | — | — | — |
| | | | | 13.5 | 3.15 | 7.58 | 4.56 | — | — | — |
| 6 | | Para-loid KM-611 (Rohm and Haas) | | 10 phr | 3.02 | 9.40 | 5.97 | — | — | — |
| 7 | | | | 0 | 2.33 | 6.82 | 3.96 | 3.29 | 4.85 | 0.99 |
| 8 | 800 | | | 2.0 | 2.17 | | | — | — | — |
| | 36° | | | 5.0 | 2.24 | | | 3.76 | 3.15 | 1.72 |
| | 18:21 | | | | | | | | | |
| | 19,6 | | | | | | | | | |

## Revendications

1 Adjuvant pour améliorer la résistance à la fracture du PVC, sous forme de particules dans lesquelles il existe un gradient de poids moléculaire croissant de 40 000 à 80 000 à la surface, à 60 000 à 300 000 à l'intérieur de la particule et un gradient de taux de cristallinité croissant de 5 à 10% à la surface à 10 à 35% à l'intérieur de la particule, lesdites particules étant obtenues par polymérisation de chlorure de vinyle en émulsion aqueuse en deux ou plusieurs étapes, l'une au moins de ces étapes étant effectuée entre 0 et 42°C, tandis que la dernière étape du procédé se déroule entre 46 et 60°C.

2. Utilisation de l'adjuvant décrit à la revendication 1 pour améliorer la résistance à la fracture d'un polychlorure de vinyle quelconque obtenu par polymérisation en masse, en suspension ou en émulsion, la proportion de l'adjuvant précité mise en oeuvre étant telle que le matériau polymérique obtenu contienne de 2 à 10% en poids de polymère préparé à une température inférieure ou égale à 42°C.

3. Procédé de fabrication d'un adjuvant pour le polychlorure de vinyle, selon la revendication 1, caractérisé en ce qu'on polymérise du chlorure de vinyle en émulsion aqueuse en au moins deux étapes, en présence d'une initiateur de polymérisation radicalaire, d'un agent tensio-actif et éventuellement d'un tampon pour fixer le pH entre 6 et 12 ainsi qu'éventuellement d'un système rédox, la teneur en chlorure de vinyle étant comprise entre 10% et 80% en poids de la quentité nette d'eau mise en oeuvre.

4. Procédé selon la revendication 3 caractérisé en ce qu'il comporte avant ladite étape finale, une étape unique de polymérisation effectuée à une température égale ou inférieure à 42°C.

5. Procédé selon la revendication 3 caractérisé en ce qu'il comporte avant ladite étape finale, au moins deux étapes de polymérisation antérieures dont une au moins est effectuée à une température égale ou inférieure à 42°C.

6. Procédé selon l'une quelconque des revendications 3 à 5 caractérisé en ce qu'au moins une étape de polymérisation effectuée avant ladite étape finale est une homopolymérisation de chlorure de vinyle.

7. Procédé selon l'une quelconque des revendications 3 à 5 caractérisé en ce que la première étape de polymérisation est une copolymérisation qui fait intervenir, en plus du chlorure de vinyle, un autre monomère.

8. Procédé suivant l'une quelconque des revendications prédédentes caractérisé en ce qu'on effectue une nouvelle addition d'agent tensio-actif au début de chaque étape, mais de manière telle que la tension superficielle du milieu ne soit pas abaissée au niveau de la valeur propre à l'agent tensio-actif dans l'eau pure à une concentration supérieure à la concentration micellaire critique.

9. Procédé suivant l'une quelconque des revendications précédentes caractérisé en ce que l'agent tensio-actif mis en oeuvre est un composé anionique employé à raision de $10^{-3}$ à $2.10^{-2}$ mole par litre.

10. Procédé suivant l'une quelconque des revendications précédentes caractérisé en ce que l'initiateur de polymérisation radicalaire utilisé est du persulfate de potassium ou du persulfate d'ammonium ou encore du peroxyde d'hydrogène, employé à raison de $10^{-3}$ à $5.10^{-1}$ mole par litre.

11. A titre de produit à usage industriel, un polychlorure de vinyle préparé par polymérisation en masse, en suspension ou en émulsion auquel on a ajouté et mélangé l'adjuvant selon la revendication 1 en une proportion telle que le matériau final contienne de 2 à 10% en poids de polymère du chlorure de vinyle polymérisé à une température inférieure ou égale à 42°C.

## Patentansprüche

1. Zusatzstoff zum Verbessern der Bruchfestigkeit von PVC, in der Form von Teilchen, in denen ein von 40 000—80 000, an der Oberfläche, bis zu 60 000—300 000 im Innern des Teilchens, steigender Molekulargewichtsgradient und ein von 5—10%, an der Oberfläche, bis zu 10—35% im Innern des Teilchens, steigender Kristallinitätsgradient besteht, wobei die Teilchen durch eine wässrige Emulsionspolymerisation in zwei oder mehrere Stufen erhalten werden und mindestens eine dieser Stufen zwischen 0° und 42°C ausgeführt wird, während die letzte Stufe des Verfahrens zwischen 46° und 60°C durchgeführt wird.

2. Verwendung des Zusatzstoffes nach Anspruch 1 zum Verbessern der Bruchfestigkeit eines Polyvinylchlorides, das durch eine Block-polymerisation, Perlpolymerisation oder Emul-sionspolymerisation erhalten wird, wobei das Verhältnis des vorgenannten Zusatzstoffes in der Weise gehalten ist, daß das erhaltene polymerisierte Material 2 bis 10 gew.% eines Polymerisats enhält, das bei einer Temperatur von weiniger als 42°C oder gleich an 42°C hergestellt ist.

3. Verfahren zum Herstellen eines Zusatzstoffes zu Polyvinylchlorid, nach Anspruch 1, dadurch gekennzeichnet, daß Vinylchlorid in wässriger Emulsion in mindestens zwei Stufen, mit einem Initiator zur radikalartigen Polymerisation, einem Emulsionsmittel und gegebenenfalls einer Pufferlösung, die den pH-wert zwischen 6 und 12 festlegt, sowie gegebenenfalls einem Redox-System polymerisiert, wobei der Gehalt an Vinylchlorid zwischen 10 Gew.% und 80 Gew.% der genauen eingebrachten Wassermenge liegt.

4. Verfahren nach Anspruch 3 dadurch gekennzeichnet, daß es, vor der letzten Stufe eine einzige Polymerisationstufe enthält, die bei einer Temperatur gleich an 42°C oder von Weniger als 42°C durchgeführt wird.

5. Verfahren nach Anspruch 3 dadurch gekennzeichnet, daß es, vor der letzten Stufe, wenigstens zwei vorhergehende Polymerisationsstufen enthält, von denen wenigstens eine Stufe bei einer Temperatur von 42°C oder von eniger als 42°C durchgeführt wird.

6. Verfahren nach einem der Ansprüche 3—5 dadurch gekennzeichnet, daß wenigstens eine Polymerisationsstufe, die vor der letzten Stufe durchgeführt wird, eine Homopolymerisation von Vinylchloride ist.

7. Verfahren nach einem der Ansprüche 3—5 dadurch gekennzeicht, daß erste Polymerisationsstufe eine Copolymerisation ist, die zusätzlich zum Vinylchlorid ein anderes Monomer einbezieht.

8. Verfahren nach einem der vorhergehenden Ansprüche dadurch gekennzeichnet, daß ein neuer Emulsionsmittelzusatz am Anfang jeder Stufe vorgenommen wird, aber in der Weise, daß die Grenzflächenspannung des Mediums nicht bis zum Wert, der dem Emulsionsmittel eigen ist, wenn dieses in reinem Wasser bei einer die Micellengrenzkonzentration übersteigende Konzentration verwendet wird, absinkt.

9. Verfahren nach einem der vorhergehenden Ansprüche dadurch gekennzeichnet, daß das verwendete Emulsionsmittel aus einer anionischen Verbindung besteht, die in einer Menge von $10^{-3}$ bis $2.10^{-2}$ mol pro Liter eingesetzt wird.

10. Verfahren nach einem der vorhergehenden Ansprüche dadurch gekennzeichnet, daß der verwendete Initiator zur radikalartigen Polymerisation aus Kaliumpersulfat oder Ammoniumpersulfat oder auch aus Hydrogenperoxyd besteht, die in einer Menge von $10^{-3}$ bis $5.10^{-1}$ Mol pro Liter eingesetzt werden.

11. Polyvinylchlorid als technisch verwendbarer Stoff, durch Blockpolymerisation, Emulsionspolymerisation oder Perlpolymerisation hergestellt, zu dem der Zusatzstoff nach Anspruch 1 im einem solchen Verhältnis hinzugefügt und beigemischt worden ist, daß das erhaltene Produkt 2 bis 10 Gew.% eines Vinylchloridpolymerisats enhält, das bei einer Temperatur von weniger als 42°C oder gleich an 42°C erhalten worden ist.

**Claims**

1. Additive to improve the fracture resistance of PVC, in the form of particles in which there is a gradient of molecular weight increasing from 40 000 to 80 000 at the surface, to values of 60 000 to 300 000 inside of the particle and a degree of cristallinity increasing from 5 to 10% at the surface to values of 10 to 35% inside of the particle, said particles being obtained by the polymerization of vinyl chloride in aqueous emulsion, in two or more steps, at least one of these steps being carried out between 0 and 42°C, while the last process step is carried out between 46° and 60°C.

2. Use of the additive of claim 1 to improve the fracture resistance of any polyvinylchloride obtained by bulk, suspension or aqueous emulsion polymerization, the amount of additive that is used being such that the resulting polymeric material contains 2 to 10 weight per cent of polymer prepared at a temperature below 42°C or equal to 42°C.

3. Process for the manufacturing of an additive designed for polyvinylchloride according to claim 1, characterized in that vinylchloride is polymerized in aqueous emulsion in at least two steps, with an initiator of radical polymerization, emulsifier and possibly a buffer to fix the pH value between 6 and 12, and possibly a redox system, the amount of vinyl chloride being comprised between 10 and 80 weight per cent of the net quantity of water that is used.

4. Process according to claim 3 characterized in that it comprises, before said final step, a single polymerization step performed at a temperature equal to 42°C or below 42°C.

5. Process according to claim 3 characterized in that it comprises, before said final step, at least two preceding polymerization steps, at least one of which being performed at a temperature equal to 42°C or below 42°C.

6. Process according to any one of the claims 3 to 5 characterized in that at least one polymerization step which is carried out before said final step is a vinyl chloride homopolymerization.

7. Process according to any one of the claims 3 to 5 characterized in that the first polymerization step is a copolymerization that involves another monomer than vinylchloride.

8. Process according to any one of the preceding claims characterized in that a new addition of emulsifier is made at the beginning of each step but in such a manner that the surface tension of the medium is not lowered to the level of the value obtained when the emulsifier is used in pure water at a concentration above its critical micelle concentration.

9. Process according to any one of the preceding claims characterized in that the emulsifier used is an anionic compound used at concentration of $10^{-3}$ to $2.10^{-2}$ mole per litre.

10. Process according to any one of the preceding claims characterized in that the initiator or radical polymerization is potassium persulfate or ammonium persulfate or hydrogenperoxide, used at a concentration of $10^{-3}$ to $5.10^{-1}$ mole per litre.

11. As a product for industrial use, a polyvinylchloride prepared by bulk, suspension or emulsion polymerization, to which the additive of claim 1 has been added and mixed in such a proportion that the final material contains from 2 to 10% by weight of a polymer of vinylchloride polymerized at a temperature below 42°C or equal to 42°C.